# EUROPEAN PATENT APPLICATION

(11) **EP 4 764 889 A1**
(43) Date of publication of application: **24.06.2026**
(21) Application number: 25155682.5
(22) Date of filing: 03.02.2025
(51) Int. Cl.: G06F 16/34, G06F 16/35, G06F 40/216

(54) **METHOD AND SYSTEM FOR ADVANCED SUMMARIZATION OF DOCUMENTS USING TOPIC INTELLIGENCE-BASED RETRIEVAL AUGMENTED GENERATION**

(30) Priority: 20.12.2024 IN 202441101557
(71) Applicant: Wipro Limited, 560 035 Karnataka (IN)
(72) Inventor: HORE, Prodip, 560100 Bangalore (IN)
(74) Representative: Finnegan Europe LLP

(57) **Abstract**

This disclosure relates to method and system of advanced summarization of documents using topic intelligence-based Retrieval Augmented Generation (RAG). The method may include receiving, through, for example using, a GUI, a set of documents and summarization instructions for the set of documents. For each of the set of documents, the method may further include determining a set of topics in a document LSI and a hybrid ensemble of statistical techniques. For each of the set of topics, the method may further include identifying a set of relevant sentence chunks from the plurality of sentence chunks through for example using, the LSI based on the summarization instructions. For each of the set of topics, the method may further include generating, through for example using, an LLM, a topic summary based on the set of relevant sentence chunks using a RAG model, and generating an advanced summary of document based on topic summary of set of topics and general RAG-based summary.

## Description

### Technical Field

This disclosure relates generally to Retrieval Augmented Generation (RAG), and more particularly to method and system for advanced summarization of documents using topic intelligence-based RAG.

### Background

Retrieval-Augmented generation (RAG) is an approach that may be used to extend capability of Large Language Models (LLMs) for generation of text by integerating a retrieval mechanism for the LLMs to access relevant external documents (stored as embeddings), thereby enriching the generated content with more accurate and contextually relevant information. The RAG may operate in two stages. The first stage may be indexing and retrieval. The second stage may be response generation. In the present state of art, RAG may be a fast and a simple solution to generating context-aware responses. However, RAG is highly dependent on the quality and relevance of the retrieved data in the embedding space. If the retrieval process fails to find relevant information for a user query, the generated response may be less coherent or accurate.

RAG has demonstrated utility in enhancing text generation by augmenting external documents. However, RAG has significant limitations for important tasks, such as document summarization (which may require a comprehensive understanding of the underlying themes and key concepts of input documents). Additionally, RAG retrieves chunks that may be semantically similar to a user query or prompt in the embedding space. However, that retrieved chunks may not necessarily represent the most important or central ideas of the input documents. By way of an example, given a user query like "Create a summary of the document," the RAG system may retrieve chunks that may contain phrases such as "key takeaways" or "main points" or chunks just close in the embedding space because these phrases may be semantically closer to the query in the embedding space. However, the retrieval process may not ensure that the retrieved chunks represent the most important or central ideas of the set of documents required for tasks like summarization. The generated summary may create surface-level matches using these chunks rather than distilling the true underlying key concepts or themes of the document.

Thus, the present invention is directed to overcome one or more limitations stated above or any other limitations associated with the known arts.

### SUMMARY

In one embodiment, a method of advanced summarization of documents using topic intelligence-based Retrieval Augmented Generation (RAG) is disclosed. In one example, the method may include receiving, through for example using, a Graphical User Interface (GUI), a set of documents and summarization instructions for the set of documents. Each of the set of documents may include a plurality of sentence chunks. For each of the set of documents, the method may further include determining a set of topics in a document through for example using, Latent Semantic Indexing (LSI) and a hybrid ensemble of statistical techniques. For each of the set of topics, the method may further include identifying a set of relevant sentence chunks from the plurality of sentence chunks through for example using, the LSI based on the summarization instructions. For each of the set of topics, the method may further include generating, through, for example using, a Large Language Model (LLM), a topic summary based on the set of relevant sentence chunks using a RAG model. The method may further include generating, through, for example using, the LLM, an advanced summary of the document based on the topic summary of each of the set of topics and a general RAG-based summary. The general RAG-based summary is a summary of the document obtained directly through, for example using, the LLM using the RAG model.

In one embodiment, a system for advanced summarization of documents using topic intelligence-based RAG is disclosed. In one example, the system may include a processor and a computer-readable medium communicatively coupled to the processor. The computer-readable medium may store processor-executable instructions, which, on execution, may cause the processor to receive, through, for example using, a GUI, a set of documents and summarization instructions for the set of documents. Each of the set of documents may include a plurality of sentence chunks. For each of the set of documents, the processor-executable instructions, on execution, may further cause the processor to determine a set of topics in a document through, for example using, LSI and a hybrid ensemble of statistical techniques. For each of the set of topics, the processor-executable instructions, on execution, may further cause the processor to identify a set of relevant sentence chunks from the plurality of sentence chunks through, for example using, the LSI based on the summarization instructions. For each of the set of topics, the processor-executable instructions, on execution, may further cause the processor to generate, through, for example using, an LLM, a topic summary based on the set of relevant sentence chunks using a RAG model. The processor-executable instructions, on execution, may further cause the processor to generate, through, for example using, the LLM, an advanced summary of the document based on the topic summary of each of the set of topics and a general RAG-based summary. The general RAG-based summary is a summary of the document obtained directly through, for example using, the LLM using the RAG model.

In one embodiment, a non-transitory computer-readable medium storing computer-executable instructions for advanced summarization of documents using topic intelligence-based RAG is disclosed. In one example, the stored instructions, when executed by a processor, may cause the processor to perform operations including receiving, through, for example using, a GUI, a set of documents and summarization instructions for the set of documents. Each of the set of documents may include a plurality of sentence chunks. For each of the set of documents, the operations may further include identifying a set of relevant sentence chunks from the plurality of sentence chunks through, for example using, LSI based on the summarization instructions. For each of the set of topics, the operations may further include identifying a set of relevant sentence chunks from the plurality of sentence chunks through, for example using, the LSI based on the summarization instructions. For each of the set of topics, the operations may further include generating, through, for example using, an LLM, a topic summary based on the set of relevant sentence chunks using a RAG model. The operations may further include generating, through, for example using, the LLM, an advanced summary of the document based on the topic summary of each of the set of topics and a general RAG-based summary. The general RAG-based summary is a summary of the document obtained directly through, for example using, the LLM using the RAG model.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
**FIG. 1** is a block diagram of an exemplary system for advanced summarization of documents using topic intelligence-based Retrieval Augmented Generation (RAG), in accordance with some embodiments.
**FIG. 2** illustrates a functional block diagram of an exemplary system for advanced summarization of documents using topic intelligence-based RAG, in accordance with some embodiments.
**FIGS. 3A** **and** **3B** are flow diagrams of an exemplary process for advanced summarization of documents using topic intelligence-based RAG, in accordance with some embodiments.
**FIG. 4** is a flow diagram of detailed exemplary process for advanced summarization of documents using topic intelligence-based RAG, in accordance with an embodiment.
**FIG. 5** is a flow diagram of an exemplary process for concatenating topic summaries with associated sub-topic summaries, in accordance with some embodiments.
**FIG. 6** is a flow diagram of a detailed exemplary process for advanced summarization of multiple documents based on topics and associated sub-topics using topic intelligence-based RAG, in accordance with an embodiment.
**FIG. 7** is a flow diagram of an exemplary process of query routing using topic summaries, in accordance with an embodiment.
**FIG. 8** is a block diagram of an exemplary computer system for implementing embodiments consistent with the present disclosure.

### DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

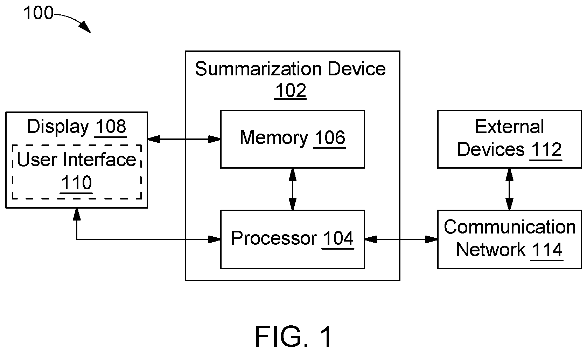

Referring now to FIG. 1, an exemplary system 100 for advanced summarization of documents using topic intelligence-based RAG is illustrated, in accordance with some embodiments. The system 100 may include a summarization device 102 (for example, a server, a desktop, a laptop, a notebook, a netbook, a tablet, a smartphone, a mobile phone, or any other computing device), in accordance with some embodiments of the present disclosure. The summarization device 102 may generate an advanced summary of a set of documents received as an input using a topic intelligence-based RAG and a Large Language Model (LLM).

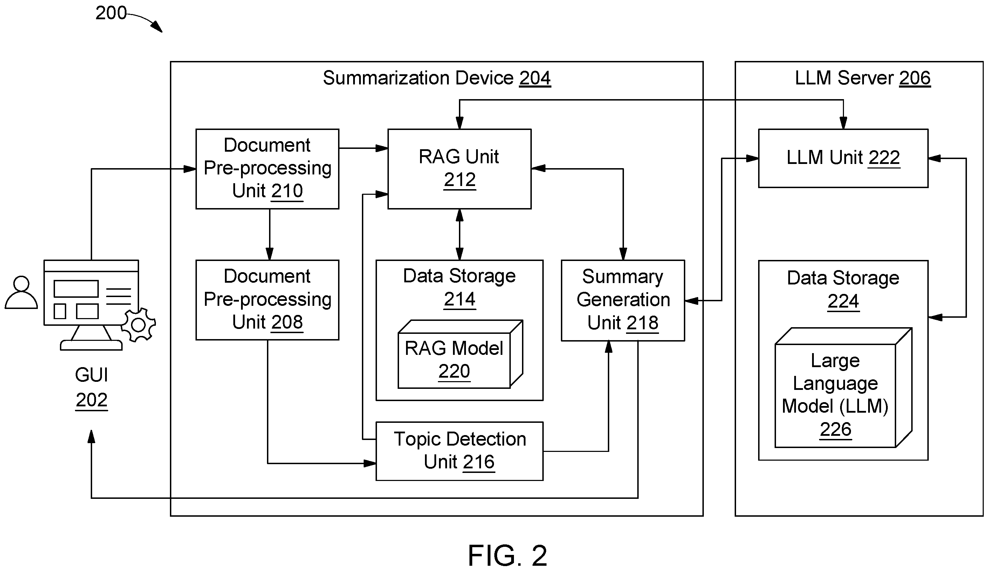

As will be described in greater detail in conjunction with FIGS. 2 -8, the summarization device 102 may receive, through, for example using, a GUI, a set of documents and summarization instructions for the set of documents. Each of the set of documents may include a plurality of sentence chunks. The plurality of sentence chunks may be generated through, for example using, a chunking algorithm. Each sentence chunk may include one or more paragraphs, one or more sentences, one or more token-limited segments, or the like.

Thereafter, for each of the set of documents, the summarization device 102 may determine a set of topics in a document through, for example using, LSI and a hybrid ensemble of statistical techniques. A topic may be a cluster of words or a cluster of sentences. For each of the set of topics, the summarization device 102 may identify a set of relevant sentence chunks from the plurality of sentence chunks through, for example using, the LSI based on the summarization instructions. For each of the set of topics, the summarization device 102 may generate, through, for example using, an LLM, a topic summary based on the set of relevant sentence chunks using a RAG model. The summarization device 102 may generate, through, for example using, the LLM, an advanced summary of the document based on the topic summary of each of the set of topics and a general RAG-based summary. The general RAG-based summary is a summary of the document obtained directly through, for example using, the LLM using the RAG model.

In some embodiments, the summarization device 102 may include one or more processors 104 and a memory 106. The memory 106 may store instructions that, when executed by the one or more processors 104, cause the one or more processors 104 to generate advanced summaries of documents using topic intelligence-based RAG, in accordance with aspects of the present disclosure. The memory 106 may also store various data (for example, a set of documents, summarization instructions, a set of topics, or the like) that may be captured, processed, and/or required by the summarization device 102. The memory 106 may be a non-volatile memory (e.g., flash memory, Read Only Memory (ROM), Programmable ROM (PROM), Erasable PROM (EPROM), Electrically EPROM (EEPROM) memory, etc.) or a volatile memory (e.g., Dynamic Random Access Memory (DRAM), Static Random-Access memory (SRAM), etc.).

The system 100 may further include a display 108. The system 100 may interact with a user via a user interface 110 accessible via the display 108. The system 100 may also include one or more external devices 112. In some embodiments, the summarization device 102 may interact with the one or more external devices 112 over a communication network 114 for sending or receiving various data. The external devices 112 may include, but may not be limited to, a remote server, a digital device, or another computing system. In an embodiment, the external devices 112 may include an external LLM server.

Referring now to FIG. 2, a functional block diagram of an exemplary system 200 for advanced summarization of documents using topic intelligence-based RAG is illustrated, in accordance with some embodiments. FIG. 2 is explained in conjunction with FIG. 1. The system 200 may include a Graphical User Interface (GUI) 202, a summarization device 204, and an LLM server 206 (which may be an external LLM server or an internally hosted LLM). The summarization device 204 may be analogous to the summarization device 102.

The summarization device 204 may include, within a memory, a second document pre-processing unit 208, a first document pre-processing unit 210, a RAG unit 212, a first data storage 214, a topic detection unit 216, and a summary generation unit 218. The first data storage 214 may include a RAG model 220. The LLM server 206 may include an LLM unit 222 and a second data storage 224. The second data storage 224 may include an LLM 226.

The first document pre-processing unit 210 may receive, through the GUI 202, a set of documents and summarization instructions for the set of documents. Each of the set of documents may include a plurality of sentence chunks. It should be noted that the set of documents may include one or more documents.

Further, the first document pre-processing unit 210 may pre-process each of the set of documents using a first set of pre-processing techniques to obtain a first set of pre-processed documents. The first set of pre-processing techniques may include removing noise, adding metadata information, Optical Character Recognition (OCR), or the like. Further, the first document pre-processing unit 210 may send the first set of pre-processed documents and the summarization instructions to the RAG unit 212 and the second pre-processing unit 208.

The RAG unit 212 may work like a standard RAG. The RAG unit 212 may create a plurality of chunks from the first set of pre-processed documents using a chunking algorithm (such as fixed-size chunking, sentence splitting, recursive chunking, semantic chunking, content-aware chunking, propositional chunking, etc.). Further, the RAG unit 212 may create a plurality of embeddings corresponding to the plurality of chunks using an embedding model (such as Word2Vec, Continuous Bag of Words (CBOW), Skip-Gram model, GloVe, Fasttext, Bidirectional Encoder Representations from Transformers (BERT), ROBERTa, etc.). The RAG unit 212 may send the plurality of embeddings to the first data storage 214 to create the RAG model 220. In other words, the RAG model 220 may include the plurality of embeddings corresponding to the first set of pre-processed documents. The RAG model 220 may be stored in the first data storage 214.

The RAG unit 212 may create a plurality of embeddings from the summarization instructions using the embedding model. Further, the RAG unit 212 may compare each of the plurality of embeddings of the summarization instructions with the plurality of embeddings stored in the RAG model 220 based on a similarity metric (such as Cosine similarity, Euclidean similarity, or the like). Based on the comparison, the RAG unit 212 may identify a relevant set of embeddings from the RAG model 220 corresponding to the plurality of embeddings of the summarization instructions. The relevant set of embeddings may include embeddings for which the similarity metric is above a predefined threshold. The RAG unit 212 may then create a general summary prompt using a document from the set of documents to be summarized, the summarization instructions, and the relevant set of embeddings. Further, the RAG unit 212 may send the general summary prompt to the LLM unit 222. The LLM unit 222 may input the general summary prompt to LLM 226. Further, the LLM unit 222, may generate, through, for example using, the LLM 226, a general RAG-based summary of the document in response to the general summary prompt. Thus, the general RAG-based summary is a summary of the document obtained directly through, for example using, the LLM 226 using the RAG model 220.

Upon receiving the first set of pre-processed documents and the summarization instructions, the second document pre-processing unit 208 may pre-process each of the first set of pre-processed documents using a second set of pre-processing techniques to obtain a second set of pre-processed documents. The second set of pre-processing techniques may include text cleaning, stopword removal, tokenization, sentence segmentation, and joining segments. Further, the second document pre-processing unit 208 may send the second set of pre-processed documents and the summarization instructions to the topic detection unit 216.

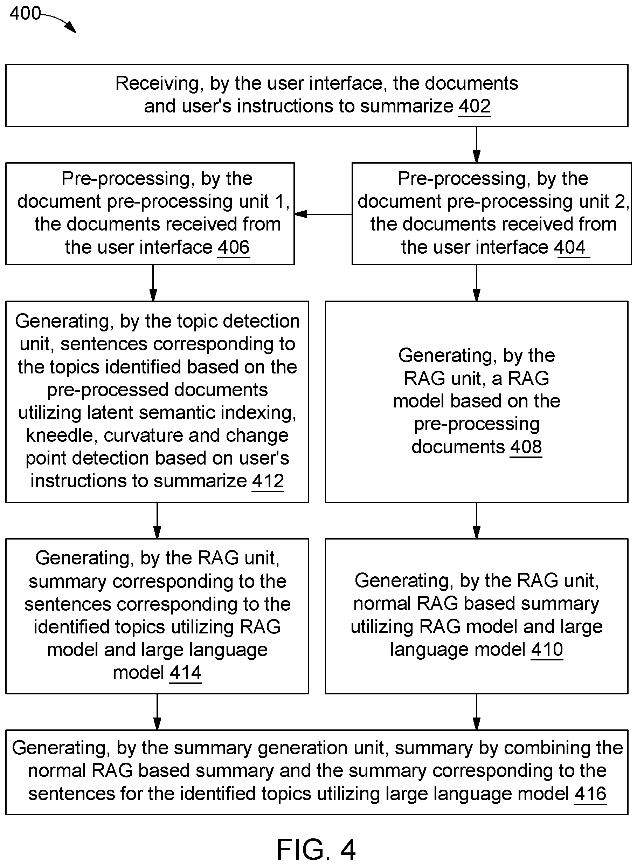

The topic detection unit 216 may receive the second set of pre-processed documents and the summarization instructions from the second document pre-processing unit 208. Further, for each of the set of documents, the topic detection unit 216 may determine a set of topics in a document through, for example using, Latent Semantic Indexing (LSI) and a hybrid ensemble of statistical techniques from the second set of pre-processed documents. By way of an example, the hybrid ensemble of statistical techniques may include a kneedle method, a curvature method, and a change Point Detection (CPD) method. This is explained in greater detail in conjunction with FIG. 4.

To determine the set of topics, the topic detection unit 216 may generate a numerical matrix from the plurality of sentence chunks using Term Frequency-Inverse Document Frequency (TF-IDF). In other words, the topic detection unit 216 may transform the plurality of chunks into a numerical matrix using TF-IDF. The numerical matrix may include a frequency mapping of each of a plurality of words in the document with the plurality of sentence chunks. The importance of each of the plurality of words may be calculated based on the frequency and rarity of each of the plurality of words.

Once the numerical matrix is generated, the topic detection unit 216 may perform a first run of truncated Singular Value Decomposition (SVD) on the numerical matrix to obtain a predefined number of topics mapped with the numerical matrix through, for example using, three decomposed matrices. The three decomposed matrices may be U matrix, S matrix, and V matrix. The first decomposed matrix (i.e., the U matrix) may include a mapping of the plurality of sentence chunks with the predefined number of topics. The second decomposed matrix (i.e., the S matrix) may include singular values indicating strength of the predefined number of topics. The third decomposed matrix (i.e., the V matrix) may include a mapping of the plurality of words with the predefined number of topics.

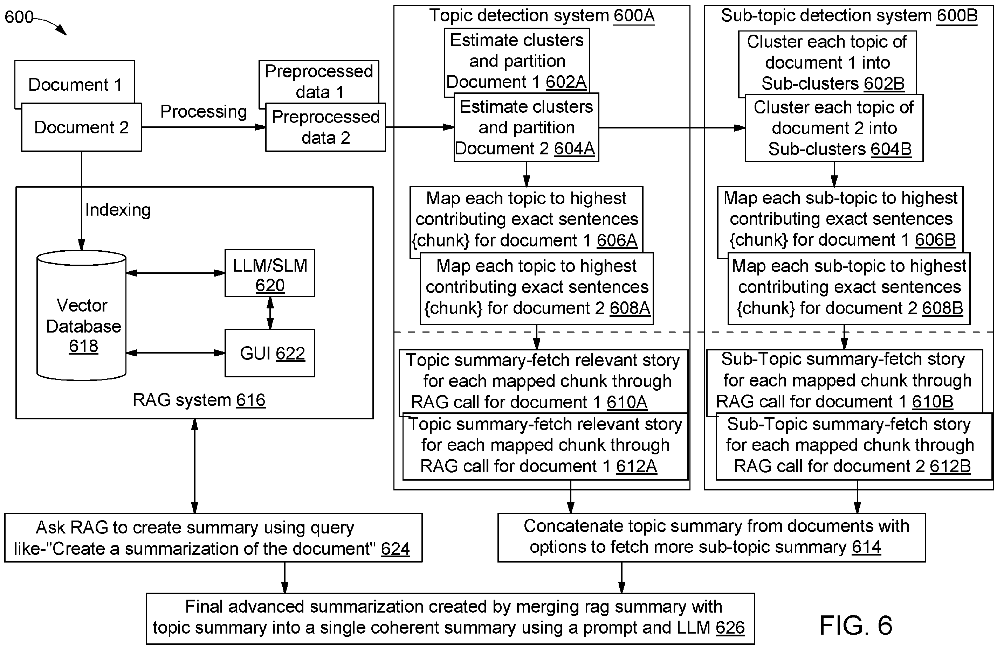

Further, the topic detection unit 216 may determine an optimal number of topics for selection from the predefined number of topics through, for example using, the hybrid ensemble of statistical techniques based on the second decomposed matrix. The optimal number of topics is an average of an output number of topics from each of the hybrid ensemble of statistical techniques. The set of topics may include the optimal number of topics, each selected from the predefined number of topics based on the corresponding strength obtained in the second decomposed matrix. For example, if the predefined number of topics is 50, the first run of SVD may identify topics from the first set of pre-processed documents. Further, if the optimal number of topics is determined to be 20, the set of topics may include top 20 topics from the 50 topics in order of the corresponding singular values. That is to say, each of the 20 topics may have a higher (absolute) singular value than each of the remaining 30 topics. As will be explained in detail in conjunction with FIG. 6, the topic detection unit 216 may also determine a set of sub-topics for each of the set of topics in a similar manner. The sub-topic detection is similar to topic detection except that the sub-topic detection for a topic is performed based on clustering of the set of relevant sentence chunks for that topic.

Once, the set of topics is determined, for each of the set of topics, the topic detection unit 216 may identify a set of relevant sentence chunks from the plurality of sentence chunks through, for example using, the LSI based on the summarization instructions. The summarization instructions may correspond to a level of depth of the summary of the set of documents required by the user. To identify the set of relevant sentence chunks from the plurality of sentence chunks, the topic detection unit 216 may perform a second run of the truncated SVD on the numerical matrix to obtain a final matrix. The final matrix may include an association strength mapping of the plurality of sentence chunks with the set of topics (and associated sub-topics). Sub-topics of a given topic having a higher association strength mapping for that topic are referred herein as dominant sub-topics.

Further, the topic detection unit 216 may identify the set of relevant sentence chunks for each of the set of topics (and associated dominant sub-topics) based on a corresponding association strength in the final matrix. A number of the set of relevant sentence chunks may be based on the summarization instructions. For example, if the user provides summarization instructions for a high level of depth of summary, a high number (e.g., 3) of relevant sentence chunks may be selected for each of the set of topics and for each of the associated set of dominant sub-topics. Further, the topic detection unit 216 may send the set of determined topics (and the associated dominant sub-topics) and the corresponding set of relevant sentence chunks to the RAG unit 212. In other words, the RAG unit 212 may receive relevant sentence chunks corresponding to each of the determined set of topics (and the associated dominant sub-topics) from the topic detection unit 216.

Further, for each of the set of topics, the RAG unit 212 and the LLM unit 222 may generate, through, for example using, the RAG model 220 and the LLM 226, respectively, a topic summary (or a sub-topic summary) based on the set of relevant sentence chunks using the RAG model 220. To generate the topic summary (or the sub-topic summary), the RAG unit 212 may compare a plurality of embeddings of the set of relevant sentence chunks of a topic (or a sub-topic) with a plurality of embeddings stored in the RAG model 220 based on a similarity analysis to obtain a relevant set of embeddings from the RAG model 220. The RAG unit 212 may further provide at least one topic summary prompt to the LLM 226 through, for example using, the LLM unit 222 to obtain the topic summary (or the sub-topic summary). The at least one topic summary prompt may include the plurality of embeddings of the set of relevant sentence chunks, the relevant set of embeddings, and the summarization instructions.

It should be noted that for generating the sub-topic summary, the set of relevant sentence chunks for the sub-topic may be obtained from the set of relevant sentence chunks of the topic. In embodiments where the sub-topic summary is generated for each of the set of sub-topics, the RAG unit 212 may concatenate, through the LLM unit 222, the topic summary with the sub-topic summaries using the LLM 226. This is explained in greater detail in conjunction with FIG. 6.

In an embodiment, the summary generation unit 218 may receive both the general RAG-based summary and the topic summary of each of the set of topics for each of the set of documents from the RAG unit 212. In such an embodiment, the summary generation unit 218 may generate, through the LLM unit 222, an advanced summary of each of the set of documents based on the topic summary of each of the set of topics and a general RAG-based summary, using the LLM 226. The summary generation unit 218 may create an advanced summary prompt including the general RAG-based summary, the topic summary of each of the set of topics, and a predefined prompt template (which may include instructions for generating a combined summary). Further, the summary generation unit 218 may send the advanced summary prompt to the LLM unit 222.

Finally, the summary generation unit 218 may generate, through, for example using, the LLM 226, a combined advanced summary based on the advanced summary for each of the set of documents in response to the advanced summary prompt. In an alternative embodiment, the summary generation unit 218 may generate, through the LLM unit 222, the combined advanced summary of the set of documents by first concatenating the topic summaries of the set of topics of all the set of documents with each other, using the LLM 226. In such an embodiment, the summary generation unit 218 may then combine, through the LLM unit 222, the concatenated topic summaries with the general RAG-based summaries of all the set of documents, using the LLM 226. The summary generation unit 218 may send the combined advanced summary to the GUI 202.

In an alternative embodiment, the summary generation unit 218 may receive a concatenated topic summary of each of the set of documents. The concatenated topic summary may be generated using the LLM 226 by the RAG unit 212 through the LLM unit 222. In the concatenated topic summary, the topic summaries (and the associated sub-topic summaries) of the set of topics (and the associated sub-topics) for each of the set of documents may be concatenated. Further, the summary generation unit 218 may receive a combined general RAG-based summary of all the set of documents. Further, the summary generation unit 218 may generate the combined advanced summary based on the concatenated topic summary and the general RAG-based summary. In this alternative embodiment, the topic summaries of the set of topics and sub-topics of all the set of documents are concatenated first. Additionally, in this alternative embodiment, the general RAG-based summary corresponds to all the set of documents (and not an individual document at a time).

It should be noted that all such aforementioned modules 208, 210, 212, 216, and 222 may be represented as a single module or a combination of different modules. Further, as will be appreciated by those skilled in the art, each of the modules 208, 210, 212, 216, and 222 may reside, in whole or in parts, on one device or multiple devices in communication with each other. In some embodiments, each of the modules 208, 210, 212, 216, and 222 may be implemented as dedicated hardware circuit comprising custom application-specific integrated circuit (ASIC) or gate arrays, off-the-shelf semiconductors such as logic chips, transistors, or other discrete components. Each of the modules 208, 210, 212, 216, and 222 may also be implemented in a programmable hardware device such as a field programmable gate array (FPGA), programmable array logic, programmable logic device, and so forth. Alternatively, each of the modules 208, 210, 212, 216, and 222 may be implemented in software for execution by various types of processors (e.g., processor 104). An identified module of executable code may, for instance, include one or more physical or logical blocks of computer instructions, which may, for instance, be organized as an object, procedure, function, or other construct. Nevertheless, the executables of an identified module or component need not be physically located together, but may include disparate instructions stored in different locations which, when joined logically together, include the module and achieve the stated purpose of the module. Indeed, a module of executable code could be a single instruction, or many instructions, and may even be distributed over several different code segments, among different applications, and across several memory devices.

As will be appreciated by one skilled in the art, a variety of processes may be employed for generating advanced summaries of documents using topic intelligence-based RAG. For example, the exemplary system 100 and the associated summarization device 102 may generate advanced summaries of documents using topic intelligence-based RAG by the processes discussed herein. In particular, as will be appreciated by those of ordinary skill in the art, control logic and/or automated routines for performing the techniques and steps described herein may be implemented by the system 100 and the associated summarization device 102 either by hardware, software, or combinations of hardware and software. For example, suitable code may be accessed and executed by the one or more processors on the system 100 to perform some or all of the techniques described herein. Similarly, application specific integrated circuits (ASICs) configured to perform some, or all of the processes described herein may be included in the one or more processors on the system 100.

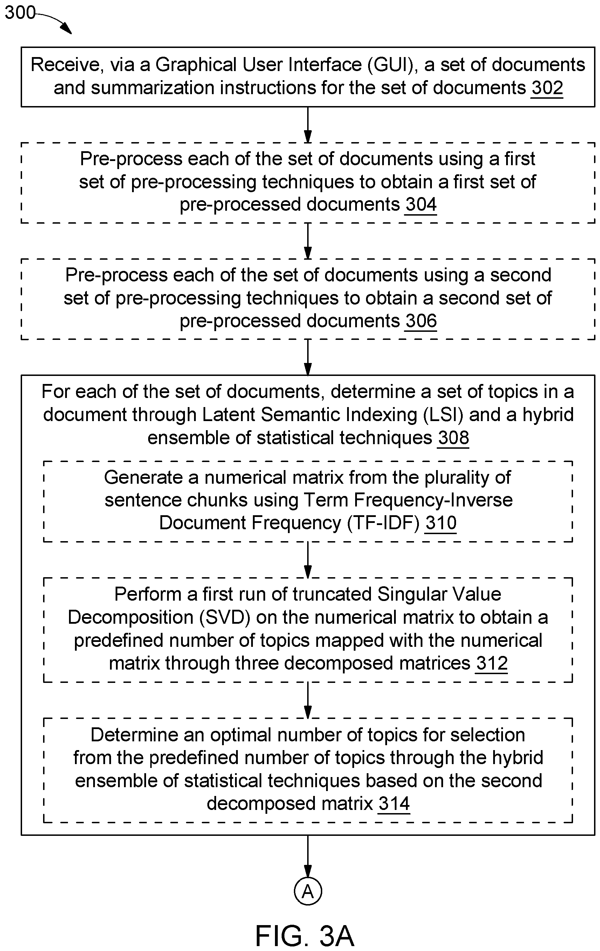

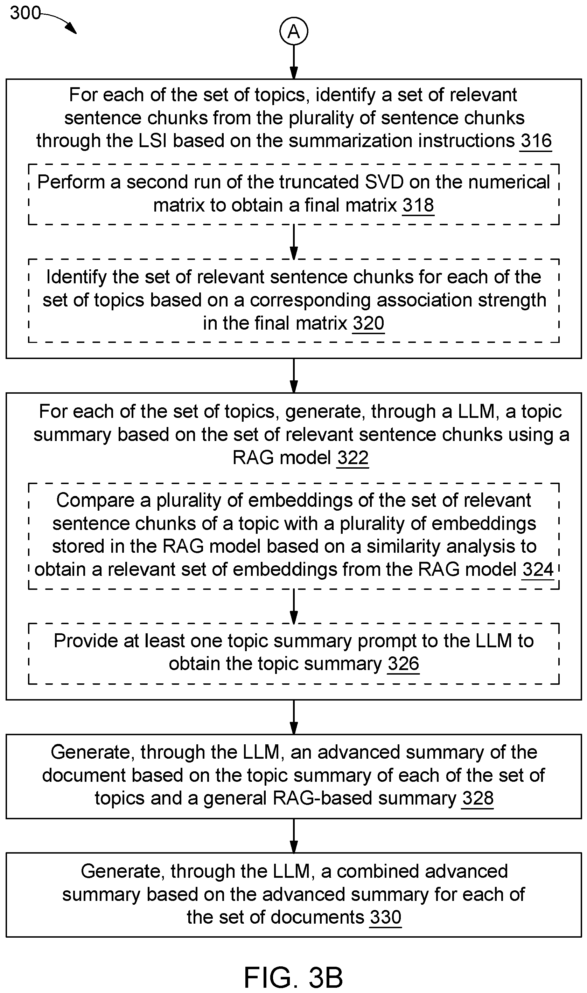

Referring now to FIGS. 3A and 3B, an exemplary process 300 for advanced summarization of documents using topic intelligence-based RAG is depicted via a flowchart, in accordance with some embodiments. FIGS. 3A and 3B are explained in conjunction with FIGS. 1 and 2. The process 300 may be implemented by the summarization device 102 of the system 100. The process 300 may include receiving, by a first document pre-processing unit (for example, the first document pre-processing unit 210), through, for example using, a GUI (for example, the GUI 202), a set of documents and summarization instructions for the set of documents, at step 302. Each of the set of documents may include a plurality of sentence chunks.

In an embodiment, the process 300 may include pre-processing, by the first pre-processing unit, each of the set of documents using a first set of pre-processing techniques to obtain a first set of pre-processed documents, at step 304. By way of an example, the first set of pre-processing techniques may include noise removal, addition of metadata (e.g., date, header, etc.), non-ascii character and control character removal using regular expressions. It should be noted that a RAG model (such as the RAG model 220) may be created by a RAG unit (such as the RAG unit 212) using a plurality of embeddings corresponding to the first set of pre-processed documents. These embeddings may be created by the RAG unit using an embedding model. Additionally, in an embodiment, the process 300 may include pre-processing, by a second document pre-processing unit (for example, the second document pre-processing unit 208), each of the first set of pre-processed documents using a second set of pre-processing techniques to obtain a second set of pre-processed documents, at step 306. By way of an example, the second set of pre-processing techniques may include text cleaning, stopword removal, tokenization, sentence segmentation, and joining segments.

Once the set of documents are pre-processed, for each of the set of documents, the process 300 may include determining, by a topic detection unit (for example, the topic detection unit 216), a set of topics in a document through, for example using, LSI and a hybrid ensemble of statistical techniques, at step 308. By way of an example, the hybrid ensemble of statistical techniques may include a kneedle method, a curvature method, and a CPD method. In an embodiment, the topic detection unit may receive the second set of pre-processed documents from the second document pre-processing unit. In such an embodiment, the topic detection unit may process each of the second set of pre-processed documents to determine the set of topics.

The step 308 may include steps 310, 312, and 314. The process 300 may include generating, by the topic detection unit, a numerical matrix from the plurality of sentence chunks using TF-IDF, at step 310. The numerical matrix may include a frequency mapping of each of a plurality of words in the document with the plurality of sentence chunks. The process 300 may further include performing, by the topic detection unit, a first run of truncated SVD on the numerical matrix to obtain a predefined number of topics (generally a higher estimate) mapped with the numerical matrix through, for example using, three decomposed matrices (for example, the U matrix, the S matrix, and the V matrix), at step 312. The first decomposed matrix may include a mapping of the plurality of sentence chunks with the predefined number of topics. The second decomposed matrix may include singular values indicating strength (or importance) of the predefined number of topics. The third decomposed matrix may include a mapping of the plurality of words with the predefined number of topics.

Further, the process 300 may include determining, by the topic detection unit, an optimal number of topics for selection from the predefined number of topics through, for example using, the hybrid ensemble of statistical techniques based on the second decomposed matrix, at step 314. The optimal number of topics may be determined as an average of an output number of topics from each of the hybrid ensemble of statistical techniques. The set of topics may include the optimal number of topics, each selected from the predefined number of topics based on the corresponding strength obtained in the second decomposed matrix. Thus, for example, from a predefined number of 50 topics (could be higher as well), the output numbers of topics obtained from the kneedle method, the curvature method, and the CPD method are 20, 24, and 22, respectively. Then, the optimal number of topics may be an average of 20, 24, and 22, which is 22. Thus, top 22 topics from the 50 topics may be determined as the set of topics based on the strength (i.e., singular value) obtained in the S matrix.

Thereafter, the process 300 may proceed to step 316. For each of the set of topics, the process 300 may include identifying, by the topic detection unit, a set of relevant sentence chunks from the plurality of sentence chunks through, for example using, the LSI based on the summarization instructions, at step 316. The step 316 may include steps 318 and 320. The process 300 may include performing, by the topic detection unit, a second run of the truncated SVD on the numerical matrix to obtain a final matrix, at step 318. The final matrix may include an association strength mapping of the plurality of sentence chunks with the set of topics. The association strength may be indicative of a correlation between a sentence chunk and a topic. Further, the process 300 may include identifying, by the topic detection unit, the set of relevant sentence chunks for each of the set of topics based on a corresponding association strength in the final matrix, at step 320.

Thereafter, the process 300 may proceed to step 322. For each of the set of topics, the process 300 may include generating, by a RAG unit (for example, the RAG unit 212) through, for example using, an LLM (for example, the LLM 226), a topic summary based on the set of relevant sentence chunks using a RAG model (for example, the RAG model 220), at step 322. The RAG model may include a plurality of embeddings corresponding to the first set of pre-processed documents. The step 322 may include steps 324 and 326. The process 300 may include comparing, by the RAG unit, a plurality of embeddings of the set of relevant sentence chunks of a topic with a plurality of embeddings stored in the RAG model based on a similarity analysis to obtain a relevant set of embeddings from the RAG model, at step 324. Further, the process 300 may include providing, by the RAG unit, at least one topic summary prompt to the LLM to obtain the topic summary, at step 326. The at least one topic summary prompt may include the plurality of embeddings of the set of relevant sentence chunks, the relevant set of embeddings, and the summarization instructions.

Thereafter, the process 300 may proceed to step 328. The process 300 may include generating, by a summary generation unit (for example, the summary generation unit 218) through, for example using, the LLM, an advanced summary of the document based on the topic summary of each of the set of topics and a general RAG-based summary, at step 328. The general RAG-based summary may be a summary of the document obtained directly through (e.g., using) the LLM using the RAG model. Further, the process 300 may include generating, by an LLM unit (for example, the LLM unit 222) through the LLM a combined advanced summary based on the advanced summary for each of the set of documents, at step 330.

Referring now to FIG. 4, a detailed exemplary process 400 for advanced summarization of documents using topic intelligence-based RAG is depicted via a flowchart, in accordance with some embodiments. FIG. 4 is explained in conjunction with FIGS. 1, 2, 3, and 4. The process 400 may be implemented by the summarization device 102 of the system 100. The process 400 may include receiving, by the GUI 202, a set of documents and summarization instructions for the set of documents, at step 402. It should be noted that the set of documents may include one or more documents. A user may provide the set of documents to be summarized through the GUI 202. The user may also provide summarization instructions for the set of documents using the GUI 202. The summarization instructions may correspond to a level of depth of the summary of the set of documents required by the user. By way of an example, the level of depth may be a level 0, level 1, level 2, and so on. A higher level of depth may correspond to a requirement of a more in-depth summary.

In an embodiment, a set of user-selectable options corresponding to the summarization instructions may be rendered on the GUI 202 (for example, a set of clickable buttons corresponding to various summarization instructions, or a drop down menu including a list of the various summarization instructions). In such an embodiment, the user may provide the summarization instructions by selecting one of the set of user-selectable options on the GUI 202. The user may choose multiple options from the set of user-selectable options to summarize the set of documents at multiple depth levels (for example, level 1, level 2, level 3, etc.). The GUI 202 may send the set of documents and the summarization instructions to the first document pre-processing unit 210.

Further, the process 400 may include pre-processing, by the first document pre-processing unit 210, the set of documents received from the GUI 202, at step 404. The first document pre-processing unit 210 may perform a first set of pre-processing techniques, including, but not limited to, removing noise, adding metadata information (for example, date, header, etc.), and removing non-ascii and control characters (if any) by regular expressions, etc. Upon performing the first set of pre-processing techniques on the set of documents, the first document pre-processing unit 210 may output a first set of pre-processed documents. Further, the first document pre-processing unit 210 may send the first set of pre-processed documents and the summarization instructions to the RAG unit 212 and the second document pre-processing unit 208. Thereafter, the process 400 may proceed to step 406 and step 408.

Further, the process 400 may include pre-processing, by the second document pre-processing unit 208, the set of documents and the summarization instructions received from the GUI 202, at step 406. The second document pre-processing unit 208 may perform a second set of pre-processing techniques, including, but not limited to, text cleaning, stopword removal, tokenization, sentence segmentation, and joining segments. The text cleaning may include converting the set of documents to lowercase and removing non-alphabetic characters. The stopword removal may include removing standard language stopwords (e.g., English stopwords) and an extended list of additional stopwords, such as archaic words and common terms (for example, "page", Roman numerals, etc.) from the set of documents to. As will be appreciated, the stopwords may distort clustering, and therefore, should be removed.

The tokenization may include tokenizing text in the set of documents into a plurality of words. Additionally, the tokenization may include filtering out short words to retain only meaningful words. Further, the sentence segmentation may include splitting the set of documents into individual sentences and discarding shorter sentences (e.g., sentences with less than 5 words). Joining the segments may include joining one or more sentences in the set of documents into a plurality of sentence chunks of pre-defined length (default pre-defined length may be of 5 sentences). This may prepare the set of documents for thematic clustering.

Upon performing the second set of pre-processing techniques on the set of documents, the second document pre-processing unit 208 may output a second set of pre-processed documents. Further, the second document pre-processing unit 208 may send the second set of pre-processed documents and the summarization instructions to the topic detection unit 216. Thereafter, the process 400 may proceed to step 412.

Further, the process 400 may include generating, by the RAG unit 212, the RAG model 220 based on the first set of pre-processed documents, at step 408. To generate the RAG model 220, the RAG unit 212 may tokenize the first set of pre-processed documents using a tokenizing algorithm. Further, the RAG unit 212 may create a plurality of embeddings corresponding to the tokenized set of documents using an embedding model. The RAG unit 212 may store the plurality of embeddings as the RAG model 220 in the first data storage 214.

Once the RAG model 220 is generated, the process 400 may include generating, by the RAG unit 212, a general RAG based summary utilizing the RAG model 220 and the LLM 226, at step 410. To generate the general RAG based summary, the RAG unit 212 may create a plurality of embeddings corresponding to the summarization instructions. Further, the RAG unit 212 may identify a set of embeddings from the RAG model 220 that may be closer to the plurality of embeddings corresponding to the summarization instructions based on Cosine similarity (or any other similarity metric).

Further, the RAG unit 212 may provide the identified set of embeddings in a pre-stored prompt to the LLM unit 222 inside the LLM server 206. By way of an example, the prompt may be "What is the summary of this document?". Further, the LLM unit 222 may compose a response based on the identified set of embeddings and the pre-stored prompt through (e.g., using) the LLM 226 fetched from the second data storage 224. Further, the LLM unit 222 may send the composed response (i.e., the general RAG based summary) to the RAG unit 212. The RAG unit 212 may then send the general RAG based summary to the summary generation unit 218. Thereafter, the process 400 may proceed to step 416.

The process 400 may include generating, by the topic detection unit 216, sentences corresponding to identified topics based on the second set of pre-processed documents utilizing LSI, kneedle method, curvature method, and the CPD method based on the summarization instructions for the set of documents provided by the user through the GUI 202, at step 412. The step 412 follows from the step 406. First, the topic detection unit 216 may identify a set of topics from each of the second set of pre-processed documents through (e.g., using) LSI. To identify the set of topics, for each pre-processed document, the topic detection unit 216 may first transform the pre-processed document into a numerical matrix using Term Frequency and Inverse Document Frequency (TF-IDF). Using TF-IDF, the importance of each word may be calculated based on frequency and rarity of that word. In the numerical matrix, rows may represent the sentence chunks, the columns may represent the words, and the intersection (i.e., elements of the numerical matrix) may represent the frequency of the words in each sentence chunk. It should be noted that for explanation of topic identification through LSI (at step 412), the term "sentence chunk" is interchangeably referred to as "document". Also, for explanation of topic identification through LSI (at step 412), the term "topic" is interchangeably referred to as "cluster"

Further, a first run of truncated SVD may be applied to the numerical matrix. The SVD may decompose the numerical matrix into three components - U matrix (mapping the documents (chunks) to the topics), S matrix (including singular values indicating topic strength), and V matrix (mapping terms (words) to topics).

For the first run of SVD, the number of topics for the decomposition of matrix may be calculated using predefined criteria. In an embodiment, for the first run of SVD, an overestimated number of topics (clusters) may be obtained using the predefined criteria. By way of an example, the predefined criteria may be "max_n_components = min(50, len(processed_segments) 12)". In other words, this predefined criteria may estimate the number of topics as 50 or half the document count. This overestimation for the first run of SVD may be performed to reduce the risk of under clustering and to estimate an optimal number of topics (clusters) from SVD.

To estimate the set of topics (clusters) from the overestimated number of topics, the topic detection unit 216 may first identify an optimal number of the set of topics (clusters). As will be appreciated by a person skilled in the art, identifying correct number of topics (clusters) in unsupervised learning may be non-trivial. Given that a document may vary in size and content quality, making it important to automatically estimate the number of the set of topics (clusters). In an embodiment, the topic detection unit 216 may use a hybrid ensemble of three distinct statistical techniques, i.e., a kneedle method, a curvature method, and a CPD method, to determine the optimal number of topics (clusters). The hybrid ensemble of statistical techniques may potentially offer a more accurate and reliable determination than one of such statistical techniques may provide individually. Additionally, given that cluster estimates are sensitive and have their own biases, by averaging the results from multiple statistical techniques, the hybrid ensemble of statistical techniques may introduce a decision-making that may be more resilient to the weaknesses or biases inherent in any individual statistical technique.

Thus, upon completion of the first run of SVD, the topic detection unit 216 may identify the optimal number of topics using the hybrid ensemble of statistical techniques. In each statistical technique of the hybrid ensemble, singular values of each of the overestimated number of topics from the S Matrix may be sorted in descending order. Further, the singular values in descending order may be passed to each statistical technique to individually estimate the optimal number of topics. It should be noted that the topics with larger singular values may be considered more important because such topics may represent underlying patterns or topics in the data (i.e., documents (chunks)) that may account for the most variance.

The kneedle method may include identifying a "knee" or "elbow" point in a curve representing the singular values, sorted in descending order. The Kneedle method, implemented through a KneeLocator function, may analyze the curve formed by plotting the singular values. The curve may be set as 'convex' and the direction as 'decreasing'. The kneedle method may effectively find the point beyond which the addition of new topics leads to diminishing returns in terms of explained variance. This point (referred as the "knee" or "elbow" point), representative of the optimal number of clusters/topics, may serve as a first estimate in the hybrid ensemble of statistical techniques.

The curvature method may detect where the information gained drops using singular values. The curvature method may include calculating the second derivative of the singular values to pinpoint areas of maximum curvature on the curve. The idea behind the curvature method is that significant changes in the curvature of the singular values curve can signal an optimal number of topics. The points of significant changes are points where the acceleration or deceleration of the rate of change in singular values may be most pronounced, indicating a shift from high to low benefit in adding more number of topics. The output from the curvature method may be a second estimate of the optimal number of topics in the hybrid ensemble of statistical techniques.

The CPD method may find significant shifts in the topic structure using singular values. The CPD method may include detecting a significant change point within the sequence of singular values. The change point may be indicative of the moment where the addition of further topics begins to offer diminishing returns in terms of the variance explained by those topics. Pruned Exact Linear Time (PELT) algorithm used in this case may scan through the descending ordered singular values. The PELT algorithm may search for a point of a noticeable shift in how much each subsequent value (i.e., topic) added contributes to the total variance. The output may be a third estimate of the optimal number of topics in the hybrid ensemble of statistical techniques.

Further, the hybrid ensemble of statistical techniques may average the output from the kneedle method, the curvature method, and the CPD method using an arithmetic mean to calculate the optimal number of clusters (topics). The hybrid ensemble of statistical techniques may provide a stable and reasonable estimate of underlying clusters in the document. Further, the optimal number of topics may be selected from the overestimated number of topics in descending order of the singular values. This selected optimal number of topics may constitute the set of topics.

Once the set of topics is identified, a second run of truncated SVD is performed with the estimated optimal number of clusters (topics) to identify relevant sentence chunks for each of the set of topics. Once the re-run of the truncated SVD is performed, a U matrix (i.e., document (chunk) to topic matrix) may be determined. The U Matrix may represent a projection of each of the plurality of sentence chunks (e.g., a group of 5 sentences) onto the topic space. Each of the plurality of sentence chunks may be assigned to the dominant topic by selecting the topic with the highest score in the S matrix. Further, a final matrix (i.e., a U*S Matrix) may be obtained. The final matrix may be a core output of running LSI, capturing the relationship between sentence chunks and the latent topics (or simply, topics).

Elements of the final matrix may correspond to an association strength mapping of the plurality of sentence chunks with the set of topics. In other words, the scores in the final matrix may represent how strongly a sentence chunk contributes to each topic. Higher values of the elements may indicate a stronger association or relevance of a sentence chunk to a corresponding topic. The scores may be used to rank the plurality of sentence chunks by the relevance to corresponding topics. Further, for each corresponding topic, the scores may be used to select the most relevant (i.e., top scoring) sentence chunk to represent the corresponding topic. Therefore, the set of topics may be efficiently mapped to the most contributing sentence chunks to obtain a set of relevant sentence chunks, providing a meaningful thematic representation of the content of the document.

The topic detection unit 216 may also determine a set of sub-topics for each of the set of topics in a similar manner as explained above. The optimal number of sub-topics may be obtained based on the singular values (i.e., strength values) in the S matrix of a corresponding topic. However, for sub-topic determination of a topic, LSI may be performed only on the set of relevant sentence chunks for that topic (and not on the entire document). This will ensure that the sub-topics are more relevant and ready to be used for providing more in-depth summaries. This may also help the user to find more distinct underlying stories in the set of documents and may provide a scope to expand a story as sub-topics are expected to contain more coherent things related to a story.

As explained previously, the summarization instructions may include the instructions to summarize the document (the entire document which includes the plurality of sentence chunks) at the plurality of depth levels. By way of an example, the plurality of depth levels may include level 0, level 1, level 2, and level 3. If the user may choose options as level 1, 2, or 3, more sub-topics may be selected and mapped to sentences. For the level 0, the topic detection unit 216 may include 1 highest contributing (or highest scoring) sentence chunk from each topic. For example, if there are 5 topics, the topic detection unit 216 may select 1 highest contributing sentence chunk from each of the 5 topics.

For the level 1, the topic detection unit 216 may include one extra chunk for each topic coming from a dominant sub-topic (i.e., the sub-topic from the set of sub-topics with the highest score). For example, if a topic 1 has 5 sub-topics, the topic detection unit 216 may select 1 dominant sub-topic from the 5 sub-topics. The topic detection unit 216 may sort the sub-topics based on highest dominant score (i.e., association strength in the final matrix) and send the highest contributing (or highest scoring) sentence chunk from the set of relevant sentence chunks of the dominant sub-topic.

For the level 2, the topic detection unit 216 may include 2 extra sentence chunks for each topic. These 2 extra sentence chunks may be obtained from the top 2 dominant sub-topics with the highest scores for that topic. For example, if topic 1 has 5 sub-topics, the topic detection unit 216 may select 2 dominant sub-topics from 5 sub-topics. The topic detection unit 216 may sort the 5 sub-topics based on dominant score (i.e., association strength in the final matrix) and send the highest contributing (or highest scoring) sentence chunks from the 2 dominant sub-topics.

For the level 3, the topic detection unit 216 may include 3 extra sentence chunks for each topic. The 3 extra sentence chunks may be obtained from the top 3 dominant sub-topics with the highest scores for that topic. For example, if topic 1 has 5 sub-topics, the topic detection unit 216 may select 3 dominant sub-topics from the 5 sub-topics. The topic detection unit 216 may sort the 5 sub-topics based on dominant score (i.e., association strength in the final matrix) and send the highest contributing (or highest scoring) sentence chunks from the 3 dominant sub-topics.

Once the set of relevant sentence chunks for the set of topics (or the associated sub-topics) is selected, the set of relevant sentence chunks from the set of topics (or the associated sub-topics) may be stored in memory and if a collision between the stored and an incoming sentence chunk occurs, next highest contributing (or next highest scoring) sentence chunk based on the dominant score may be selected. The topic detection unit 216 may send the highest contributing sentences of the set of relevant sentence chunks for each topic and sub-topic are sent to the RAG Unit 212.

Further, the process 400 may include generating, by the RAG unit 212, summary corresponding to the identified topics through the RAG model 220 and the LLM 226, at step 414. The RAG unit 212 may create a plurality of embeddings corresponding to the received contributing sentences. Further, the RAG unit 212 may identify the plurality of embeddings from the RAG model 220 closer to the plurality of embeddings corresponding to the received set of relevant sentences for each topic based on the cosine similarity. Further, the RAG unit 212 may provide the identified plurality of embeddings, the set of relevant sentences, along with the summarization instructions in a pre-stored prompt to the LLM unit 222 inside the LLM Server 206. By way of an example, an exemplary prompt is shown below.
"Please find related information for the topics below. Please keep key details and summarize each topic in less than 500 words.
Topics:
   Topic1, Topic2,.... Topicn"

If the number of the set of topics (or the associated sub-topics) is small (e.g., below 20), a single prompt like above may be enough. However, when the number of the set of topics is large, to the RAG unit 212 may split the set of topics into multiple prompts and may fetch topic summaries (or sub-topic summaries) in parallel. The topic summaries (or sub-topic summaries) may be stored and later retrieved for multiple tasks as it can be perceived as representation of data.

The LLM unit 222 may then compose a response to the prompt based on the plurality of embeddings and the summarization instructions provided by the user to summarize the topic (or sub-topic) using the LLM 226 fetched from the second data storage 224. The LLM unit 222 may provide the response, i.e., the topic summary (or sub-topic summary) corresponding to the set of relevant sentences of an identified topic (or sub-topic) to the RAG unit 212.

In an embodiment, the RAG unit 212 may send the topic summary (or the sub-topic summary) for each of the set of topics (and the associated sub-topics) for each of the set of documents to the summary generation unit 218. Alternatively, the topic detection unit 216 may first concatenate the topic summary (or the sub-topic summary) of each of the set of topics (and the associated sub-topics) of all the set of documents. In such an embodiment, the topic detection unit 216 may send the concatenated topic summary to the summary generation unit 218.

Further, the process 400 may include generating, by the summary generation unit 218, summary by combining the general rag-based summary and the summary corresponding to the sentences for the identified topics using the LLM 226, at step 416. The step 416 follows from the steps 410 and 414. The summary generation unit 218 may send the general RAG-based summary and the topic summary (or the sub-topic summary) corresponding to the sentences for the identified topics to the LLM unit 222 in a pre-stored prompt for creating the combined summary. By way of an example, an exemplary pre-stored prompt is shown below.
"Text1 below is usual summary of a document. Text2 is summary of key topics from the same document.
Combine Text1 and Text2 into a single coherent final text, keeping the details of Text1 and Text2.
Text1 :
   RAG Summary
Text2:
   Topic Summary"

The LLM unit 222 may compose the response based on the prompt by combining both the general RAG based summary and the topic summary corresponding to the set of relevant sentences for the identified topics, to obtain a combined advanced summary, using the LLM 226 fetched from the second data storage 224. In case the topic summary corresponds to topic summaries of each of the set of documents, the general RAG based summary corresponds to the general summary of that document. In such a case, first the summary generation unit 218 may generate an advanced summary for that document. Then, the summary generation unit 218 may combine the advanced summaries of all the set of documents to generate the combined advanced summary.

In case the topic summary is the concatenated topic summary of all the set of documents, the general RAG based summary corresponds to all of the set of documents. The LLM unit 222 may send the combined advanced summary to the summary generation unit 218.

Further, the summary generation unit 218 may render the combined summary on the GUI 202. The disclosed summarization device 102 may also be used for systematic exploration of large documents. Main topics and their topic summaries can be displayed directly to the user on the GUI 202. The user, via the GUI 202, may then click a particular topic to see sub-topics and most dominant top stories contained in the topic in a hierarchical way.

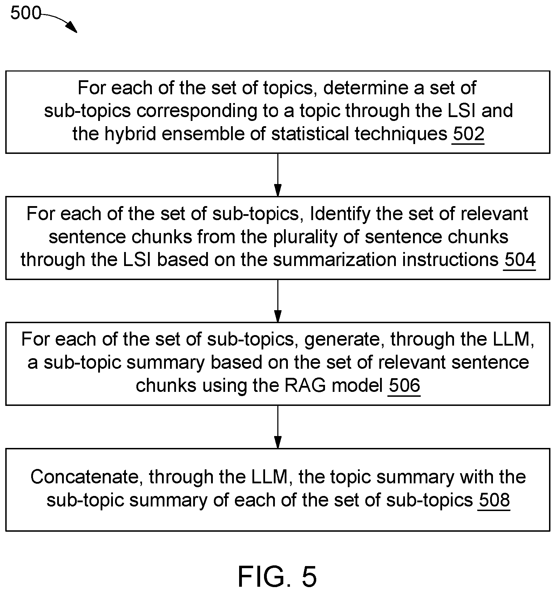

Referring now to FIG. 5, an exemplary process 500 for concatenating topic summary with associated sub-topic summaries is depicted via a flowchart, in accordance with some embodiments. FIG. 5 is explained in conjunction with FIGS. 1 - 6. The process 500 may be implemented by the summarization device 102 of the system 100. For each of the set of topics, the process 500 may include determining, by a topic detection unit (for example, the topic detection unit 216) a set of sub-topics corresponding to a topic through, for example using, the LSI and the hybrid ensemble of statistical techniques, at step 502.

Further, for each of the set of sub-topics, the process 500 may include identifying, by the topic detection unit, the set of relevant sentence chunks from the plurality of sentence chunks through, for example using, the LSI based on the summarization instructions, at step 504. A number of the set of relevant sentence chunks is based on the summarization instructions. For each of the set of sub-topics, the process 500 may include generating, by the topic detection unit through (e.g., using) an LLM unit (for example, the LLM unit 222), a sub-topic summary based on the set of relevant sentence chunks using the RAG model using an LLM (for example, the LLM 226), at step 506. Finally, the process 500 may include concatenating, by the topic detection unit through (e.g., using) the LLM, the topic summary with the sub-topic summary of each of the set of sub-topics, at step 508.

Referring now to FIG. 6, a detailed exemplary process 600 for advanced summarization of multiple documents based on topics and associated sub-topics using topic intelligence-based RAG is depicted via a flowchart, in accordance with an embodiment. FIG. 6 is explained in conjunction with FIGS. 1 - 5. The process 600 may be implemented by the summarization device 102 of the system 100. It may be noted that the process 600 explains, by way of an example, advanced summary generation of 2 documents. However, it should be noted that, in principle, the process 600 may be implemented for advanced summary generation of any number of input documents. The process 600 may include pre-processing the document 1 and the document 2 to obtain the pre-processed data 1 and the pre-processed data 2. Further, the process 600 may include a sub-process 600A and a sub-process 600B.

The sub-process 600A may include estimating, by the topic detection unit 216, clusters and partition of the document 1, at step 602A. Similarly, the sub-process 600A may include estimating, by the topic detection unit 216, clusters (i.e., the set of topics) and partitioning the document 2, at step 604A. The estimated clusters and partitioned document 1 and the document 2 may also be processed by the sub-process 600B for clustering the topics into a set of sub-topics. Thereafter, the sub-process 600A may include mapping, by the topic detection unit 216, each topic to highest contributing exact sentences (i.e. the set of relevant sentence chunks) for document 1, at step 606A. Similarly, the sub-process 600A may include mapping, by the topic detection unit 216, each topic to highest contributing exact sentences for document 2, at step 608A.

Once the mapping is done, the sub-process 600A may include generating, by the RAG unit 212, a topic summary by fetching relevant story for mapped chunk through the RAG unit 212 for document 1, at step 610A. Similarly, the sub-process 600A may include generating, by the RAG unit 212, a topic summary by fetching relevant story for mapped chunk through the RAG unit 212 for document 2, at step 612A. The topic summary of each of the set of topics of each of the document 1 and the document 2 is the output of the sub-process 600A.

The sub-process 600B may include clustering, by the topic detection unit 216, each topic of the document 1 (obtained at the step 602A the sub-process 600A) into sub-clusters (i.e., a set of sub-topics), at step 602B. Similarly, sub-process 600B may include clustering, by the topic detection unit 216, each topic of the document 1 (obtained at the step 604A of the sub-process 600A) into sub-clusters, at step 604B. Once the sub-clusters are created, the sub-process 600B may include mapping, by the topic detection unit 216, each sub-topic to highest contributing exact sentences (i.e., the set of relevant sentence chunks) for the document 1, at step 606B. Similarly, the sub-process 600B may include mapping, by the topic detection unit 216, each sub-topic to highest contributing exact sentences for the document 2, at step 608B.

Further, the sub-process 600B may include generating, by the RAG unit 212, a sub-topic summary by fetching relevant story for each mapped chunk through (e.g., using) a RAG call for document 1, at step 610B. Similarly, the sub-process 600B may include generating, by the RAG unit 212, a sub-topic summary by fetching relevant story for each mapped chunk through a RAG call for document 2, at step 612B. The sub-topic summary for each of the set of sub-topics of each of the document 1 and the document 2 is an output of the sub-process 600B.

Further, the process 600 may include concatenating, by the RAG unit 212, the topic summary of the set of topics of the document 1 and the document 2 (output of the sub-process 600A) and the sub-topic summary of the set of sub-topics of the document 1 and the document 2 (output of the sub-process 600B), at step 614. Thereafter, the process 600 may proceed to the step 626.

The process 600 may include indexing the document 1 and the document 2 into a RAG system 616. The RAG system 616 may include a vector database 618 (analogous to the RAG model 220), an LLM/SLM 620 (analogous to the LLM 226), and a GUI 622 (analogous to the GUI 202). Embeddings from the indexed document 1 and the indexed document 2 may be stored in the vector database 618. Further, the process 600 may include asking the RAG system 616 to create a general RAG based summary using a user query (e.g., "Create a summarization of the document"), at step 624. Based on the user query received from the GUI 622, the RAG system 616 may retrieve a set of embeddings from the vector database 618 similar to embeddings of the user query.

The RAG system 616 may then input a prompt to the LLM/SLM 620. The prompt may include the set of embeddings, the summarization instructions, the indexed document 1, and the indexed document 2. The LLM/SLM 620 may then generate a normal summary (i.e., a general RAG based summary) of the document 1 and the document 2 in response to the prompt. In an embodiment, the normal summary may be sent to the GUI by the RAG unit 212. Finally, the process 600 may include creating, by the summary generation unit 218, a final advanced summary by merging the normal summary with the topic summary into a single coherent summary using a prompt and the LLM 620, at step 626. The step 626 follows from the steps 614 and 624.

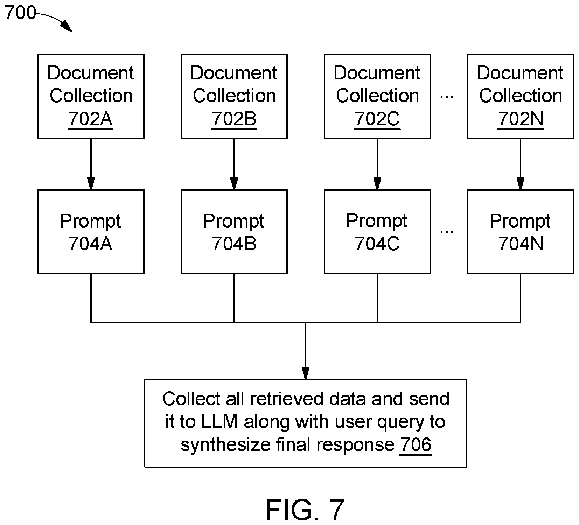

Referring now to FIG. 7, a flow chart of an exemplary process 700 of query routing using topic summaries is depicted via a flowchart, in accordance with some embodiments. In many cases, the RAG model 220 may be required to operate on a plurality of document collections (for example, a document collection 702A, a document collection 702B, a document collection 702C, ..., a document collection 702N). The plurality of document collections may be heterogeneous and may be required to be better organized into multiple buckets. Putting everything in a single bucket/workspace and creating a RAG model out of the single bucket may make retrieval of relevant information hard, leading to inaccurate results.

Thus, a plurality of documents may be organized to the plurality of document collections (for example, the document collection 702A, the document collection 702B, the document collection 702C, ..., the document collection n 702N). When a user query is received, a prompt can be designed to check an appropriate bucket where the answer may lie by providing topic summaries as context to the prompt and the user query. Given that topic summaries may be a condensed representation of texts, context to usual queries may also be provided, besides summarization.

Thus, for the plurality of document collections, a plurality of prompts (for example, a prompt 704A, a prompt 704B, a prompt 704C, ..., 704N) may be created for routing the user query to an appropriate document collection. By way of an example, each of the plurality of query routing prompts may be as follows.
"Below are topics related to a document. Based on user question at the end, emit a probability score that answer may lie in this document.
Topics:
   Topic₁, Topic₂, ..., Topicₙ
Question:
   User Question"

Further, each of the plurality of query routing prompts may also include a condition based on a comparison between the probability score and a predefined threshold probability score. By way of an example, the condition may be as follows.

```
"If score>Th:
                    Do retrieval based on user query using RAG or other
                    methods.
      Else
                    Ignore"
```

Further, the process 700 may include collecting all retrieved data from the RAG model 220 and send the retrieved data to the LLM 226 along with user query to synthesize a final query routing response, at step 706.

As will be also appreciated, the above-described techniques may take the form of computer or controller implemented processes and apparatuses for practicing those processes. The disclosure can also be embodied in the form of computer program code containing instructions embodied in tangible media, such as floppy diskettes, solid state drives, CD-ROMs, hard drives, or any other computer-readable storage medium, wherein, when the computer program code is loaded into and executed by a computer or controller, the computer becomes an apparatus for practicing the invention. The disclosure may also be embodied in the form of computer program code or signal, for example, whether stored in a storage medium, loaded into and/or executed by a computer or controller, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic circuits.

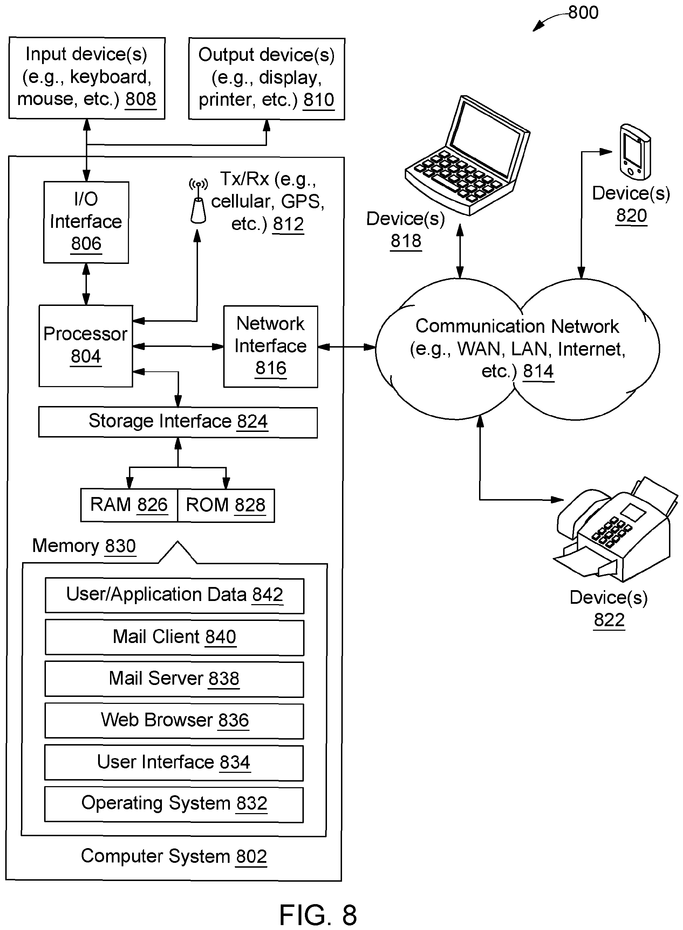

The disclosed methods and systems may be implemented on a conventional or a general-purpose computer system, such as a personal computer (PC) or server computer. Referring now to FIG. 8, an exemplary computing system 800 that may be employed to implement processing functionality for various embodiments (e.g., as a SIMD device, client device, server device, one or more processors, or the like) is illustrated. Variations of computer system 802 may be used for implementing system 100 for advanced summarization of documents using topic intelligence-based Retrieval Augmented Generation (RAG). Computer system 802 may include a central processing unit ("CPU" or "processor") 804. Processor 804 may include at least one data processor for executing program components for executing user-generated or system-generated requests. A user may include a person, a person using a device such as such as those included in this disclosure, or such a device itself. The processor 804 may include specialized processing units such as integrated system (bus) controllers, memory management control units, floating point units, graphics processing units, digital signal processing units, etc. The processor 804 may include a microprocessor, such as AMD^{®} ATHLON^{®}, DURON^{®} OR OPTERON^{®}, ARM's application, embedded or secure processors, IBM^{®} POWERPC^{®}, INTEL^{®} CORE^{®} processor, ITANIUM^{®} processor, XEON^{®} processor, CELERON^{®} processor or other line of processors, etc. The processor 804 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc

Processor 804 may be disposed in communication with one or more input/output (I/O) devices via I/O interface 806. The I/O interface 806 may employ communication protocols/methods such as, without limitation, audio, analog, digital, monoaural, RCA, stereo, IEEE-1394, near field communication (NFC), FireWire^{®}, Camera Link^{®}, GigE^{®}, serial bus, universal serial bus (USB), infrared, PS/2, BNC, coaxial, component, composite, digital visual interface (DVI), high-definition multimedia interface (HDMI^{®}), radio frequency (RF) antennas, S-Video, video graphics array^{®} (VGA), IEEE^{®} 802.n /b/g/n/x, Bluetooth^{®}, cellular (e.g., code-division multiple access (CDMA), high-speed packet access (HSPA+), global system for mobile communications (GSM^{®}), long-term evolution (LTE^{®}), WiMAX^{®}, or the like), etc..

Using the I/O interface 806, the computer system 802 may communicate with one or more I/O devices. For example, the input device 808 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, altimeter, gyroscope, proximity sensor, or the like), stylus, scanner, storage device, transceiver, video device/source, visors, etc. Output device 810 may be a printer, fax machine, video display (e.g., cathode ray tube (CRT), liquid crystal display (LCD), light-emitting diode (LED), plasma, or the like), audio speaker, etc. In some embodiments, a transceiver 812 may be disposed in connection with the processor 804. The transceiver 812 may facilitate various types of wireless transmission or reception. For example, the transceiver 812 may include an antenna operatively connected to a transceiver chip (e.g., TEXAS INSTRUMENTS^{®} WILINK WL1286^{®}, BROADCOM^{®} BCM4550IUB8^{®}, INFINEON TECHNOLOGIES^{®} X-GOLD 618-PMB9800^{®} transceiver, or the like), providing IEEE 802.11a/b/g/n, Bluetooth, FM, global positioning system (GPS), 2G/3G HSDPA/HSUPA communications, etc.

In some embodiments, the processor 804 may be disposed in communication with a communication network 816 via a network interface 814. The network interface 814 may communicate with the communication network 816. The network interface may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 816 may include, without limitation, a direct interconnection, local area network (LAN), wide area network (WAN), wireless network (e.g., using Wireless Application Protocol), the Internet, etc. Using the network interface 814 and the communication network 816, the computer system 802 may communicate with devices 818, 820, and 822. These devices may include, without limitation, personal computer(s), server(s), fax machines, printers, scanners, various mobile devices such as cellular telephones, smartphones (e.g., APPLE^{®} IPHONE^{®}, BLACKBERRY^{®} smartphone, ANDROID^{®} based phones, etc.), tablet computers, eBook readers (AMAZON^{®} KINDLE^{®}, NOOK^{®} etc.), laptop computers, notebooks, gaming consoles (MICROSOFT^{®} XBOX^{®}, NINTENDO^{®} DS^{®}, SONY^{®} PLAYSTATION^{®}, etc.), or the like. In some embodiments, the computer system 802 may itself embody one or more of these devices.

In some embodiments, the processor 804 may be disposed in communication with one or more memory devices (e.g., RAM 826, ROM 828, etc.) via a storage interface 824. The storage interface may connect to memory devices including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), STD Bus, RS-232, RS-422, RS-485, 12C, SPI, Microwire, 1-Wire, IEEE 1284, Intel^{®} QuickPathlnterconnect, InfiniBand, PCIe, etc. The memory drives may further include a drum, magnetic disc drive, magneto-optical drive, optical drive, redundant array of independent discs (RAID), solid-state memory devices, solid-state drives, etc.

The memory devices may store, within a memory 830, a collection of program or database components, including, without limitation, an operating system 832, user interface application 834, web browser 836, mail server 838, mail client 840, user/application data 842 (e.g., any data variables or data records discussed in this disclosure), etc. The operating system 832 may facilitate resource management and operation of the computer system 802. Examples of operating systems include, without limitation, APPLE^{®} MACINTOSH^{®} OS X, UNIX, Unix-like system distributions (e.g., Berkeley Software Distribution (BSD), FreeBSD, NetBSD, OpenBSD, etc.), Linux distributions (e.g., RED HAT^{®}, UBUNTU^{®}, KUBUNTU^{®}, etc.), IBM^{®} OS/2, MICROSOFT^{®} WINDOWS^{®} (XP^{®}, Vista^{®}/7/8, etc.), APPLE^{®} IOS^{®}, GOOGLE^{®} ANDROID^{®}, BLACKBERRY^{®} OS, or the like. User interface 834 may facilitate display, execution, interaction, manipulation, or operation of program components through textual or graphical facilities. For example, user interfaces may provide computer interaction interface elements on a display system operatively connected to the computer system 802, such as cursors, icons, check boxes, menus, scrollers, windows, widgets, etc. Graphical user interfaces (GUIs) may be employed, including, without limitation, APPLE^{®} MACINTOSH^{®} operating systems' AQUA^{®} platform, IBM^{®} OS/2^{®}, MICROSOFT^{®} WINDOWS^{®} (e.g., AERO^{®}, METRO^{®}, etc.), UNIX X-WINDOWS, web interface libraries (e.g., ACTIVEX^{®}, JAVA^{®}, JAVASCRIPT^{®}, AJAX^{®}, HTML, ADOBE^{®} FLASH^{®}, etc.), or the like.

In some embodiments, the computer system 802 may implement a web browser 836 stored program component. The web browser may be a hypertext viewing application, such as MICROSOFT^{®} INTERNET EXPLORER^{®}, GOOGLE^{®} CHROME^{®}, MOZILLA^{®} FIREFOX^{®}, APPLE^{®} SAFARI^{®}, etc. Secure web browsing may be provided using HTTPS (secure hypertext transport protocol), secure sockets layer (SSL), Transport Layer Security (TLS), etc. Web browsers may utilize facilities such as AJAX^{®}, DHTML, ADOBE^{®} FLASH^{®}, JAVASCRIPT^{®}, JAVA^{®}, application programming interfaces (APIs), etc. In some embodiments, the computer system 802 may implement a mail server 838 stored program component. The mail server may be an Internet mail server such as MICROSOFT^{®} EXCHANGE^{®}, or the like. The mail server may utilize facilities such as ASP, ActiveX, ANSI C++/C#, MICROSOFT .NET^{®} CGI scripts, JAVA^{®}, JAVASCRIPT^{®}, PERL^{®}, PHP^{®}, PYTHON^{®}, WebObjects, etc. The mail server may utilize communication protocols such as internet message access protocol (IMAP), messaging application programming interface (MAPI), MICROSOFT^{®} EXCHANGE^{®}, post office protocol (POP), simple mail transfer protocol (SMTP), or the like. In some embodiments, the computer system 802 may implement a mail client 840 stored program component. The mail client may be a mail viewing application, such as APPLE MAIL^{®}, MICROSOFT ENTOURAGE^{®}, MICROSOFT OUTLOOK^{®}, MOZILLA THUNDERBIRD^{®}, etc.

In some embodiments, computer system 802 may store user/application data 842, such as the data, variables, records, etc. (e.g., input data, moving parts data, static data, systems data, structured data, unstructured data, business application data, human generated content data, machine data, set of features, set of unique patterns, failure information, corrective action data, output data, predictive models (trained ML model, pattern identification model, data mining model, etc.), and so forth) as described in this disclosure. Such databases may be implemented as fault-tolerant, relational, scalable, secure databases such as ORACLE^{®} or SYBASE^{®}. Alternatively, such databases may be implemented using standardized data structures, such as an array, hash, linked list, struct, structured text file (e.g., XML), table, or as object-oriented databases (e.g., using OBJECTSTORE^{®}, POET^{®}, ZOPE^{®}, etc.). Such databases may be consolidated or distributed, sometimes among the various computer systems discussed above in this disclosure. It is to be understood that the structure and operation of the any computer or database component may be combined, consolidated, or distributed in any working combination.

Thus, the disclosed method and system try to overcome the technical problem of advanced summarization of documents using topic intelligence-based Retrieval Augmented Generation (RAG). The disclosed method and system may receive, through (e.g., using) a GUI, a set of documents and summarization instructions for the set of documents. Each of the set of documents may include a plurality of sentence chunks. For each of the set of documents, the disclosed method and system may further determine a set of topics in a document through (e.g., using) LSI and a hybrid ensemble of statistical techniques. Further, for each of the set of topics, the disclosed method and system may identify a set of relevant sentence chunks from the plurality of sentence chunks through (e.g., using) the LSI based on the summarization instructions. Further, for each of the set of topics, the disclosed method and system may generate, through an LLM, a topic summary based on the set of relevant sentence chunks using a RAG model. Finally, the disclosed method and system may generate, through (e.g., using) the LLM, an advanced summary of the document based on the topic summary of each of the set of topics and a general RAG-based summary. The general RAG-based summary is a summary of the document obtained directly through the LLM using the RAG model.

As will be appreciated by those skilled in the art, the techniques described in the various embodiments discussed above are not routine, or conventional, or well understood in the art. The techniques may enhance document summarization by addressing a gap of current RAG models. By using LSI, the techniques may identify thematic structure of the set of documents thematic structure before retrieval, ensuring that the fetched data for summarization may reflect core themes of the document. Selection of LSI may create better reproducible and stable results and may be preferred for consistency and reliability of results. The techniques may adjust based on complexity and length of the set of documents, estimating the optimal number of topics without manual intervention for summarizing long and complex documents. The techniques may select multiple levels of sub-topics. By allowing multiple levels of sub-topic selection, the user may deep dive into required level of detail, thereby ensuring that the most contributing sentences from the document are retained, improving retrieval precision and minimizing ambiguity in fetching more relevant information from the document in the embedding space using RAG. Mapping exact sentences may help RAG to retrieve relevant information better.

In light of the above-mentioned advantages and the technical advancements provided by the disclosed method and system, the claimed steps as discussed above are not routine, conventional, or well understood in the art, as the claimed steps enable the following solutions to the existing problems in conventional technologies. Further, the claimed steps clearly bring an improvement in the functioning of the device itself as the claimed steps provide a technical solution to a technical problem.

The specification has described method and system of advanced summarization of documents using topic intelligence-based RAG. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

The following clauses describe certain embodiments of the present invention:
1. A method of advanced summarization of documents using topic intelligence-based Retrieval Augmented Generation (RAG), the method comprising:
   receiving, by a summarization device and through a Graphical User Interface (GUI), a set of documents and summarization instructions for the set of documents, wherein each of the set of documents comprises a plurality of sentence chunks;
   for each of the set of documents,
      determining, by the summarization device, a set of topics in a document through Latent Semantic Indexing (LSI) and a hybrid ensemble of statistical techniques;
      for each of the set of topics, identifying, by the summarization device, a set of relevant sentence chunks from the plurality of sentence chunks through the LSI based on the summarization instructions;
      for each of the set of topics, generating, by the summarization device and through a Large Language Model (LLM), a topic summary based on the set of relevant sentence chunks using a RAG model; and
      generating, by the summarization device and through the LLM, an advanced summary of the document based on the topic summary of each of the set of topics and a general RAG-based summary, wherein the general RAG-based summary is a summary of the document obtained directly through the LLM using the RAG model.
2. The method of clause 1, further comprising:
   generating, through the LLM, a combined advanced summary based on the advanced summary for each of the set of documents.
3. The method of clause 1, further comprising:
   pre-processing each of the set of documents using a first set of pre-processing techniques to obtain a first set of pre-processed documents, wherein the RAG model comprises a plurality of embeddings corresponding to the first set of pre-processed documents; and
   pre-processing each of the set of documents using a second set of pre-processing techniques to obtain a second set of pre-processed documents, wherein determining the set of topics comprises determining the set of topics in each of the second set of pre-processed documents through the LSI and the hybrid ensemble of statistical techniques.
4. The method of clause 1, wherein the hybrid ensemble of statistical techniques comprises a kneedle method, a curvature method, and a Change Point Detection (CPD) method.
5. The method of clause 1, wherein determining the set of topics comprises:
   generating a numerical matrix from the plurality of sentence chunks using Term Frequency-Inverse Document Frequency (TF-IDF), wherein the numerical matrix comprises a frequency mapping of each of a plurality of words in the document with the plurality of sentence chunks; and
   performing a first run of truncated Singular Value Decomposition (SVD) on the numerical matrix to obtain a predefined number of topics mapped with the numerical matrix through three decomposed matrices, wherein:
      a first decomposed matrix comprises a mapping of the plurality of sentence chunks with the predefined number of topics,
      a second decomposed matrix comprises singular values indicating strength of the predefined number of topics, and
      a third decomposed matrix comprises a mapping of the plurality of words with the predefined number of topics.
6. The method of clause 5, further comprising:
   determining an optimal number of topics for selection from the predefined number of topics through the hybrid ensemble of statistical techniques based on the second decomposed matrix, wherein:
   the optimal number of topics is an average of an output number of topics from each of the hybrid ensemble of statistical techniques, and
   the set of topics comprises the optimal number of topics, each selected from the predefined number of topics based on the corresponding strength obtained in the second decomposed matrix.
7. The method of clause 6, wherein identifying the set of relevant sentence chunks from the plurality of sentence chunks comprises:
   performing a second run of the truncated SVD on the numerical matrix to obtain a final matrix, wherein the final matrix comprises an association strength mapping of the plurality of sentence chunks with the set of topics; and
   identifying the set of relevant sentence chunks for each of the set of topics based on a corresponding association strength in the final matrix.
8. The method of clause 1, wherein generating, through the LLM, the topic summary comprises:
   comparing a plurality of embeddings of the set of relevant sentence chunks of a topic with a plurality of embeddings stored in the RAG model based on a similarity analysis to obtain a relevant set of embeddings from the RAG model; and
   providing at least one topic summary prompt to the LLM to obtain the topic summary, wherein the at least one topic summary prompt comprises the plurality of embeddings of the set of relevant sentence chunks, the relevant set of embeddings, and the summarization instructions.
9. The method of clause 1, further comprising:
   for each of the set of topics,
   determining a set of sub-topics corresponding to a topic through the LSI and the hybrid ensemble of statistical techniques;
   for each of the set of sub-topics, identifying the set of relevant sentence chunks from the plurality of sentence chunks through the LSI based on the summarization instructions, wherein a number of the set of relevant sentence chunks is based on the summarization instructions;
   for each of the set of sub-topics, generating, through the LLM, a sub-topic summary based on the set of relevant sentence chunks using the RAG model; and
   concatenating, through the LLM, the topic summary with the sub-topic summary of each of the set of sub-topics.
10. A system for advanced summarization of documents using topic intelligence-based RAG, the system comprising:
   a processor; and
   a memory communicatively coupled to the processor, wherein the memory stores processor instructions, which when executed by the processor, cause the processor to:
      receive, through a GUI, a set of documents and summarization instructions for the set of documents, wherein each of the set of documents comprises a plurality of sentence chunks
      for each of the set of documents,
         determine a set of topics in a document through LSI and a hybrid ensemble of statistical techniques;
         for each of the set of topics, identify a set of relevant sentence chunks from the plurality of sentence chunks through the LSI based on the summarization instructions;
         for each of the set of topics, generate, through an LLM, a topic summary based on the set of relevant sentence chunks using a RAG model; and
   generating, through the LLM, an advanced summary of the document based on the topic summary of each of the set of topics and a general RAG-based summary, wherein the general RAG-based summary is a summary of the document obtained directly through the LLM using the RAG model.
11. The system of clause 10, wherein the processor instructions, on execution, further cause the processor to:
   generate, through the LLM, a combined advanced summary based on the advanced summary for each of the set of documents.
12. The system of clause 11, wherein the processor instructions, on execution, further cause the processor to:
   pre-process each of the set of documents using a first set of pre-processing techniques to obtain a first set of pre-processed documents, wherein the RAG model comprises a plurality of embeddings corresponding to the first set of pre-processed documents; and
   pre-process each of the set of documents using a second set of pre-processing techniques to obtain a second set of pre-processed documents, wherein determining the set of topics comprises determining the set of topics in each of the second set of pre-processed documents through the LSI and the hybrid ensemble of statistical techniques.
13. The system of clause 10, wherein the hybrid ensemble of statistical techniques comprises a kneedle method, a curvature method, and a CPD method.
14. The system of clause 10, wherein to determine the set of topics, the processor instructions, on execution, further cause the processor to:
   generate a numerical matrix from the plurality of sentence chunks using TF-IDF, wherein the numerical matrix comprises a frequency mapping of each of a plurality of words in the document with the plurality of sentence chunks; and
   perform a first run of truncated SVD on the numerical matrix to obtain a predefined number of topics mapped with the numerical matrix through three decomposed matrices, wherein:
      a first decomposed matrix comprises a mapping of the plurality of sentence chunks with the predefined number of topics,
      a second decomposed matrix comprises singular values indicating strength of the predefined number of topics, and
      a third decomposed matrix comprises a mapping of the plurality of words with the predefined number of topics.
15. The system of clause 14, wherein the processor instructions, on execution, further cause the processor to:
   determine an optimal number of topics for selection from the predefined number of topics through the hybrid ensemble of statistical techniques based on the second decomposed matrix, wherein:
   the optimal number of topics is an average of an output number of topics from each of the hybrid ensemble of statistical techniques, and
   the set of topics comprises the optimal number of topics, each selected from the predefined number of topics based on the corresponding strength obtained in the second decomposed matrix.
16. The system of clause 15, wherein to identify the set of relevant sentence chunks from the plurality of sentence chunks, the processor instructions, on execution, further cause the processor to, at least one of:
   perform a second run of the truncated SVD on the numerical matrix to obtain a final matrix, wherein the final matrix comprises an association strength mapping of the plurality of sentence chunks with the set of topics; and
   identify the set of relevant sentence chunks for each of the set of topics based on a corresponding association strength in the final matrix.
17. The system of clause 14, wherein to generate, through the LLM, the topic summary, the processor instructions, on execution, cause the processor to:
   compare a plurality of embeddings of the set of relevant sentence chunks of a topic with a plurality of embeddings stored in the RAG model based on a similarity analysis to obtain a relevant set of embeddings from the RAG model; and
   provide at least one topic summary prompt to the LLM to obtain the topic summary, wherein the at least one topic summary prompt comprises the plurality of embeddings of the set of relevant sentence chunks, the relevant set of embeddings, and the summarization instructions.
18. The system of clause 10, wherein the processor instructions, on execution, further cause the processor to:
   for each of the set of topics,
   determine a set of sub-topics corresponding to a topic through the LSI and the hybrid ensemble of statistical techniques;
   for each of the set of sub-topics, identify the set of relevant sentence chunks from the plurality of sentence chunks through the LSI based on the summarization instructions, wherein a number of the set of relevant sentence chunks is based on the summarization instructions;
   for each of the set of sub-topics, generate, through the LLM, a sub-topic summary based on the set of relevant sentence chunks using the RAG model; and
   concatenate, through the LLM, the topic summary with the sub-topic summary of each of the set of sub-topics.
19. A non-transitory computer-readable medium storing computer-executable instructions for advanced summarization of documents using topic intelligence-based RAG, the computer-executable instructions configured for:
   receiving, through a GUI, a set of documents and summarization instructions for the set of documents, wherein each of the set of documents comprises a plurality of sentence chunks;
   for each of the set of documents,
      determining a set of topics in a document through LSI and a hybrid ensemble of statistical techniques;
      for each of the set of topics, identifying a set of relevant sentence chunks from the plurality of sentence chunks through the LSI based on the summarization instructions;
      for each of the set of topics, generating, through an LLM, a topic summary based on the set of relevant sentence chunks using a RAG model; and
      generating, through the LLM, an advanced summary of the document based on the topic summary of each of the set of topics and a general RAG-based summary, wherein the general RAG-based summary is a summary of the document obtained directly through the LLM using the RAG model.
20. The non-transitory computer-readable medium of clause 19, wherein the computer-executable instructions are further configured for generating, through the LLM, a combined advanced summary based on the advanced summary for each of the set of documents.

## Claims

1. A method of advanced summarization of documents using topic intelligence-based Retrieval Augmented Generation, RAG, the method comprising:
receiving, by a summarization device and using a Graphical User Interface, GUI, a set of documents and summarization instructions for the set of documents, wherein each document in the set of documents comprises a plurality of sentence chunks;
for each document in the set of documents:
determining, by the summarization device, a set of topics in the document using Latent Semantic Indexing, LSI, and a hybrid ensemble of statistical techniques;
for each topic in the set of topics, identifying, by the summarization device, a set of relevant sentence chunks from the plurality of sentence chunks using the LSI based on the summarization instructions;
for each topic in the set of topics, generating, by the summarization device and using a Large Language Model, LLM, a topic summary based on the set of relevant sentence chunks using a RAG model; and
generating, by the summarization device and using the LLM, an advanced summary of the document based on the topic summary of each topic in the set of topics and a general RAG-based summary, wherein the general RAG-based summary is a summary of the document obtained directly using the LLM using the RAG model.

2. The method of claim 1, further comprising:
generating, using the LLM, a combined advanced summary based on a respective advanced summary for each of the set of documents.

3. The method of any preceding claim, further comprising:
pre-processing each document in the set of documents using a first set of pre-processing techniques to obtain a first set of pre-processed documents, wherein the RAG model comprises a plurality of embeddings corresponding to the first set of pre-processed documents; and
pre-processing each document in the set of documents using a second set of pre-processing techniques to obtain a second set of pre-processed documents, wherein determining the set of topics comprises determining the set of topics in each of the second set of pre-processed documents using the LSI and the hybrid ensemble of statistical techniques.

4. The method of any of claims 1-3, wherein the hybrid ensemble of statistical techniques comprises a kneedle method, a curvature method, and a Change Point Detection, CPD, method.

5. The method of any of claims 1-4, wherein determining the set of topics comprises:
generating a numerical matrix from the plurality of sentence chunks using Term Frequency-Inverse Document Frequency, TF-IDF, wherein the numerical matrix comprises a frequency mapping of each of a plurality of words in the document with the plurality of sentence chunks; and
performing a first run of truncated Singular Value Decomposition, SVD, on the numerical matrix to obtain a predefined number of topics mapped with the numerical matrix using three decomposed matrices, wherein:
a first decomposed matrix comprises a mapping of the plurality of sentence chunks with the predefined number of topics,
a second decomposed matrix comprises singular values indicating strength of the predefined number of topics, and
a third decomposed matrix comprises a mapping of the plurality of words with the predefined number of topics.

6. The method of claim 5, further comprising:
determining an optimal number of topics for selection from the predefined number of topics using the hybrid ensemble of statistical techniques based on the second decomposed matrix, wherein:
the optimal number of topics is an average of an output number of topics from each of the hybrid ensemble of statistical techniques, and
the set of topics comprises the optimal number of topics, each selected from the predefined number of topics based on the corresponding strength obtained in the second decomposed matrix.

7. The method of claim 6, wherein identifying the set of relevant sentence chunks from the plurality of sentence chunks comprises:
performing a second run of the truncated SVD on the numerical matrix to obtain a final matrix, wherein the final matrix comprises an association strength mapping of the plurality of sentence chunks with the set of topics; and
identifying the set of relevant sentence chunks for each of the set of topics based on a corresponding association strength in the final matrix.

8. The method of any of claims 1-7, wherein generating, using the LLM, the topic summary comprises:
comparing a plurality of embeddings of the set of relevant sentence chunks of a topic with a plurality of embeddings stored in the RAG model based on a similarity analysis to obtain a relevant set of embeddings from the RAG model; and
providing at least one topic summary prompt to the LLM to obtain the topic summary, wherein the at least one topic summary prompt comprises the plurality of embeddings of the set of relevant sentence chunks, the relevant set of embeddings, and the summarization instructions.

9. The method of any of claims 1-8, further comprising:
for each of the set of topics,
determining a set of sub-topics corresponding to a topic using the LSI and the hybrid ensemble of statistical techniques;
for each of the set of sub-topics, identifying the set of relevant sentence chunks from the plurality of sentence chunks using the LSI based on the summarization instructions, wherein a number of the set of relevant sentence chunks is based on the summarization instructions;
for each of the set of sub-topics, generating, using the LLM, a sub-topic summary based on the set of relevant sentence chunks using the RAG model; and
concatenating, using the LLM, the topic summary with the sub-topic summary of each of the set of sub-topics.

10. A system for advanced summarization of documents using topic intelligence-based RAG, the system comprising:
a processor; and
a memory communicatively coupled to the processor, wherein the memory stores processor instructions, which when executed by the processor, cause the processor to perform the method according to any of claims 1-9.

11. A computer-readable medium storing computer-executable instructions for advanced summarization of documents using topic intelligence-based RAG, the computer-executable instructions configured to cause a processor to perform the method according to any of claims 1-9.
